# EUROPÄISCHE PATENTSCHRIFT

(11) **EP 1 585 775 B1**
(45) Veröffentlichungstag und Bekanntmachung des Hinweises auf die Patenterteilung: **02.07.2008**
(21) Anmeldenummer: 03782443.0
(22) Anmeldetag: 18.12.2003
(51) Int. Cl.: C08F 230/08

(54) **VERFAHREN ZUR HERSTELLUNG VON MIT SILIKON MODIFIZIERTEN POLYMERISATEN**
METHOD FOR PRODUCING SILICONE-TREATED POLYMERS
PROCEDE POUR PRODUIRE DES POLYMERISATS SILICONES

(30) Priorität: 20.01.2003 DE 10301975
(43) Veröffentlichungstag der Anmeldung: 19.10.2005
(73) Patentinhaber: Wacker Chemie AG, 81737 München (DE)
(72) Erfinder: STARK, Kurt, 91365 Weilersbach (DE); HÖGL, Christian, 84367 Reut (DE)
(74) Vertreter: Schuderer, Michael
(86) Internationale Anmeldenummer: PCT/EP2003/014491
(87) Internationale Veröffentlichungsnummer: WO 2004/065437

(56) Entgegenhaltungen:
- EP-A- 1 308 468
- DE-A- 10 215 962

## Beschreibung

Die Erfindung betrifft ein Verfahren zur Herstellung von mit Silikon modifizierten Polymerisaten in Form deren wässrigen Polymerdispersionen oder in Form deren Polymerpulver, sowie deren Verwendung, und Silikoneinheiten enthaltende Schutzkolloide.

Organosiliciumverbindungen wie Organosiloxanpolymere werden zur Hydrophobierung von Polymerisaten von ethylenisch ungesättigten Monomeren verwendet. Derart hydrophob modifizierte Polymere werden in Form deren Polymerpulver, insbesondere in Wasser redispergierbaren Polymerpulver, oder als wässrige Polymerdispersion in vielen Bereichen eingesetzt. Sie finden Anwendung als Bindemittel in Beschichtungsmitteln oder Klebemitteln, insbesondere im Baubereich und Textilbereich, sowie als Bindemittel in Kosmetika und Haarpflegemittel.

Aus der WO-A 95/20626 ist bekannt, in Wasser redispergierbare Polymerpulver durch Zugabe von nicht copolymerisierbaren Organosiliciumverbindungen zu modifizieren. Die EP-A 0352339 beschreibt Schutzanstriche für Betonkonstruktionen, welche Copolymerisate von Divinyl-Polydimethylsiloxan mit Acrylat- bzw. Methacrylatestern und mit Vinyl- bzw. Acryl-funktionellen Alkoxysilanen als Lösung in organischen Lösungsmitteln enthalten. In der EP-B 771826 werden wässrige Bindemittel für Coatings und Klebemittel auf der Basis von Emulsionspolymerisaten von Vinylestern, Acryl- oder Methacrylsäureestern oder Vinylaromaten beschrieben, welche als Vernetzer Polysiloxane mit ungesättigten Resten, beispielsweise Vinyl-, Acryloxy- bzw. Methacryloxy-Gruppen, enthalten. In der EP-A 943634 werden wässrige Latices zur Verwendung als Beschichtungsmittel beschrieben, welche durch Copolymerisation von ethylenisch ungesättigten Monomeren in Gegenwart eines Silanolgruppen enthaltenden Siliconharzes hergestellt werden. Die EP-A 1095953 beschreibt mit Silikon gepfropfte Vinylcopolymere, wobei ein Carbosiloxan-Dendrimer auf dem Vinylpolymerisat aufgepfropft ist.

Aus der DE-A 19951877 und der WO-A 99/04750 ist bekannt, dass silikonhaltige Polymerisate durch Polymerisation von ethylenisch ungesättigten Monomeren in Gegenwart eines linearen Polydialkylsiloxans mit Polyalkylenoxid-Seitenketten zugänglich werden. Die US-A 5216070 beschreibt ein Verfahren zur inversen Emulsionspolymerisation von carboxylfunktionellen Monomeren, wobei als Emulgator lineare Polydialkylsiloxane mit Polyalkylenoxid-Seitenketten eingesetzt werden. Die DE-A 4240108 beschreibt ein Polymerisationsverfahren zur Herstellung von polysiloxanhaltigen Bindemitteln, zur Verwendung in schmutzabweisenden Überzügen, wobei die Monomere in Gegenwart eines OH-, COOH- oder Epoxi-funktionellen Polydialkylsiloxans, welches noch Polyethergruppen enthalten kann, polymerisiert werden. Aus der DE-A 10041163 ist ein Herstellverfahren für haarkosmetische Formulierungen bekannt, bei dem Vinylester in Gegenwart einer polyetherhaltigen Verbindung, beispielsweise polyetherhaltige Silikonverbindungen, polymerisiert werden.

Ein Nachteil der im Stand der Technik beschriebenen Silikonmodifizierten Emulsionspolymerisate ist eine starke Neigung zur Hydrolyse und zum unkontrollierten Vernetzen, die bei manchen Anwendungen zwar gewünscht und nachträglich, durch Silan- und Katalysatorzugabe, noch verstärkt wird, aber bei Anstrichdispersionen bzw. beim Einsatz als Beschichtungsmittel zu unerwünschten Gelkörpern, "Stippen" und unlöslichen Bestandteilen führt. Des weiteren sind die bisher bekannten Silikon-haltigen Emulsionspolymerisate oftmals nicht alkalibeständig, da Silikone bekanntlich im Alkalischen nicht stabil sind. Aus diesem Grund nehmen in den bisher beschriebenen Systemen die Hydrophobie und die damit verbundenen positiven Eigenschaften nach einem längerem Zeitraum sehr stark ab. Schließlich stellt sich bei den Emulsionspolymerisaten durch das Einbringen einer großen Menge an Silanen oder Silikonen eine ungenügende Teilchengrößenverteilung ein, das heißt die Teilchen werden zu groß und das Polymerisat wird inhomogen, was sich in einer Serumbildung oder Phasenseparation äußern kann. Darüberhinaus kann auch Koagulatbildung auftreten.

Aufgabe der Erfindung war es, Polymerisate zu entwickeln, die hydrolysebeständig und hydrophob, dadurch witterungsstabil, wasserabweisend und nicht verschmutzend sind und darüber hinaus eine gute Wasserdampfdurchlässigkeit aufweisen und eine hohe Naßabriebsbeständigkeit besitzen. Eine weitere Aufgabe bestand darin, ein Verfahren zur Verfügung zu stellen, mit dem hydrophob modifizierte Polymerisate mit einer engen Teilchengrößenverteilung und ohne Koagulation zugänglich werden.

Gegenstand der Erfindung ist ein Verfahren zur Herstellung von mit Silikon modifizierten Polymerisaten in Form deren wässrigen Polymerdispersionen oder in Form deren Polymerpulver mittels radikalischer Polymerisation von ethylenisch ungesättigten Monomeren in wässrigem Medium und gegebenenfalls Trocknung der damit erhältlichen Polymerdispersionen, dadurch gekennzeichnet, dass
ein oder mehrere Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide polymerisiert werden,
wobei vor, während oder nach deren Polymerisation ein silikonhaltiges Vinylalkohol-Mischpolymerisat zugegeben wird, enthaltend
a) 0 bis 60 Gew.-% ein oder mehrere Monomereinheiten von Vinylestern von unverzweigten oder verzweigten Alkylcarbonsäuren mit 1 bis 15 C-Atomen,
b) 20 bis 99.5 Gew.-% Vinylalkohol-Einheiten,
c) 0.5 bis 70 Gew.-% Monomereinheiten von einem oder mehreren Silikonen mit der allgemeinen Formel R¹ₐR₃₋ₐSiO(SiR₂O)ₙSiR₃₋ₐR¹ₐ,
wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 10 bis 1000, sowie gegebenenfalls weiteren Hilfsmonomeren, wobei mindestens ein Silikon mindestens einen Rest R¹ enthält, und wobei sich die Angaben in Gew.-% auf 100 Gew.-% aufaddieren.

Geeignete Vinylester sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 13 C-Atomen, beispielsweise VeoVa9^{R} oder VeoVa10^{R} (Handelsnamen der Firma Shell). Besonders bevorzugt ist Vinylacetat, am meisten bevorzugt ist eine Kombination von Vinylacetat mit α-verzweigten Monocarbonsäuren mit 5 bis 11 C-Atomen, wie VeoVa10

Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat.

Geeignete Diene sind 1,3-Butadien und Isopren. Beispiele für copolymerisierbare Olefine sind Ethen und Propen. Als Vinylaromaten können Styrol und Vinyltoluol copolymerisiert werden. Aus der Gruppe der Vinylhalogenide werden üblicherweise Vinylchlorid, Vinylidenchlorid oder Vinylfluorid, vorzugsweise Vinylchlorid, eingesetzt.

Gegebenenfalls können noch 0.05 bis 30 Gew.-%, bezogen auf das Gesamtgewicht der ethylenisch ungesättigten Monomere, Hilfsmonomere copolymerisiert werden. Beispiele für Hilfsmonomere sind ethylenisch ungesättigte Mono- und Dicarbonsäuren oder deren Salze, vorzugsweise Crotonsäure, Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Als Hilfsmonomere geeignet sind auch kationische Monomere wie Diallyldimethylammoniumchlorid (DADMAC), 3-Trimethylammoniumpropyl(meth)acrylamidchlorid (MAPTAC) und 2-Trimethylammoniumethyl(meth)acrylatchlorid. Ferner sind geeignet Vinylether, Vinylketone, weitere vinylaromatische Verbindungen, die auch Heteroatome besitzen können.

Geeignete Hilfsmonomere sind auch polymerisierbare Silane bzw. Merkaptosilane. Bevorzugt sind γ-Acryl- bzw. γ-Methacryloxy-propyltri(alkoxy)silane, α-Methacryloxymethyltri(alkoxy)silane, γ-Methacryloxypropyl-methyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele hierfür sind Vinyltrimethoxysilan, Vinyltriethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxyethoxy)silan, Trisacetoxyvinylsilan, 3-(Triethoxysilyl)propylbernsteinsäureanhydridsilan. Bevorzugt werden auch 3-Mercaptopropyltriethoxysilan, 3-Mercaptopropyltrimethoxysilan und 3-Mercaptopropylmethyldimethoxysilan.

Weitere Beispiele sind funktionalisierte (Meth)acrylate, insbesondere Epoxy-funktionelle wie Glycidylacrylat, Glycidylmethacrylat, Allylglycidether, Vinylglycidether, oder Hydroxyalkyl-funktionelle wie Hydroxyethyl(meth)acrylat, oder substituierte oder unsubstituierte Aminoalkyl(meth)acrylate, oder cyclische Monomere, wie N-Vinylpyrrolidon.

Geeignet sind zusätzlich auch polymerisierbare Silikonmakromere mit mindestens einer ungesättigten Gruppe, wie lineare oder verzweigte Polydialkylsiloxane mit C₁- bis C₆-Alkylrest, und mit einer Kettenlänge von 10 bis 1000, bevorzugt 50 bis 500 SiO(CₙH₂ₙ₊₁)₂-Einheiten, welche eine oder zwei terminale, oder ein oder mehrere kettenständige, polymerisierbare Gruppen (funktionelle Gruppen) enthalten. Beispiele hierfür sind Polydialkylsiloxane mit einer oder zwei Vinyl-, Acryloxyalkyl-, Methacryloxyalkyl-oder Mercaptoalkyl-Gruppen, wobei die Alkylgruppen gleich oder verschieden sein können und 1 bis 6 C-Atome enthalten. Bevorzugt werden α,ω-Divinyl-Polydimethylsiloxane, α,ω-Di-(3-acryloxypropyl)-Polydimethylsiloxane, α,ω-Di-(3-methacryloxypropyl)-Polydimethylsiloxane, α-Monovinyl-Polydimethylsiloxane, α-Mono-(3-acryloxypropyl)-Polydimethylsiloxane, α-Mono-(3-methacryloxypropyl)-Polydimethylsiloxane, sowie Silikone mit kettenübertragenden Gruppen wie α-Mono-(3-mercaptopropyl)-Polydimethylsiloxane oder α,ω-Di-(3-mercaptopropyl)-Polydimethylsiloxane. Geeignet sind auch die polymerisierbaren Silikonmakromere, wie sie in der EP-A 614924 beschrieben sind.

Weitere Beispiele sind vorvernetzende Comonomere wie mehrfach ethylenisch ungesättigte Comonomere, beispielsweise Divinyladipat, Divinylbenzol, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Die ethylenisch ungesättigten Monomere werden dabei vorzugsweise so ausgewählt, dass wässrige Copolymerdispersionen und wässrige Redispersionen der Copolymerpulver resultieren, die ohne Zusatz von Filmbildehilfsmittel eine Mindestfilmbildetemperatur MFT von < 10°C, bevorzugt < 5°C, insbesondere von 0°C bis 2°C aufweisen. Dem Fachmann ist aufgrund der Glasübergangstemperatur Tg bekannt, welche Monomere bzw. Monomermischungen dafür eingesetzt werden können. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Bevorzugt sind die nachfolgend genannten Copolymerzusammensetzungen:
Polymerisate von Vinylacetat;
Vinylester-Copolymerisate von Vinylacetat mit weiteren Vinylestern wie Vinyllaurat, Vinylpivalat, Vinyl-2-ethylhexansäureester, Vinylester einer alpha-verzweigten Carbonsäure, insbesondere Versaticsäurevinylester (VeoVa9^{R}, VeoVa10^{R});
Vinylester-Ethylen-Copolymerisate, wie Vinylacetat-Ethylen-Copolymerisate, welche gegebenenfalls noch weitere Vinylester wie Vinyllaurat, Vinylpivalat, Vinyl-2-ethylhexansäureester, Vinylester einer alpha-verzweigten Carbonsäure, insbesondere Versaticsäurevinylester (VeoVa9^{R}, VeoVa10^{R}), oder Fumarsäure- oder Maleinsäurediester enthalten;
Vinylester-Ethylen-Copolymerisate, wie Vinylacetat-Ethylen-Copolymerisate, welche gegebenenfalls noch weitere Vinylester wie Vinyllaurat, Vinylpivalat, Vinyl-2-ethylhexansäureester, vinylester einer alpha-verzweigten Carbonsäure, insbesondere Versaticsäurevinylester (VeoVa9^{R}, VeoVa 10^{R}) und ein polymerisierierbares Silikonmakromer enthalten;
Vihylester-Ethylen-Vinylchlorid-Copolymerisate, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure, insbesondere Versaticsäurevinylester (VeoVa9^{R}, VeoVa10^{R}), enthalten sind; Vinylester-Acrylsäureester-Copolymerisate mit Vinylacetat und/ oder Vinyllaurat und/oder Versaticsäure-Vinylester und Acrylsäureester, insbesondere Butylacrylat oder 2-Ethylhexylacrylat, welche gegebenenfalls noch Ethylen enthalten; Acrylsäureester-Copolymerisate, vorzugsweise mit n-Butylacrylat und/oder 2-Ethylhexylacrylat;
Methylmethacrylat-Copolymerisate, vorzugsweise mit Butylacrylat und/oder 2-Ethylhexylacrylat, und/oder 1,3-Butadien;
Styrol-1,3-Butadien-Copolymerisate und Styrol-(Meth)Acrylsäureester-Copolymerisate wie Styrol-Butylacrylat, Styrol-Methylmethacrylat-Butylacrylat oder Styrol-2-Ethylhexylacrylat, wobei als Butylacrylat n-, iso-, tert-Butylacrylat eingesetzt werden kann.

Am meisten bevorzugt werden Vinylester-Ethylen-Copolymerisate wie Vinylacetat-Ethylen-Copolymerisate, sowie Copolymerisate von Vinylacetat und Ethylen und Vinylester einer α-verzweigten Carbonsäure mit 9 oder 10 C-Atomen (VeoVa9^{R}, VeoVa10^{R}), und insbesondere Copolymerisate von Vinylacetat, Ethylen, Vinylester einer α-verzweigten Carbonsäure mit 9 oder 10 C-Atomen (VeoVa9^{R}, VeoVa10^{R}) mit copolymerisierbaren Silikonmakromeren; mit einem Ethylenanteil von vorzugsweise 2 bis 30 Gew.-%, welche gegebenenfalls zusätzlich noch weitere Hilfsmonomeranteile in den angegebenen Mengen enthalten können.

1 Die silikonhaltigen Polymerisate werden mittels radikalischer Polymerisation in wässrigem Medium, vorzugsweise Emulsionspolymerisation, hergestellt. Die Polymerisation wird üblicherweise in einem Temperaturintervall von 20°C bis 100°C durchgeführt, insbesondere zwischen 45°C und 80°C. Die Initiierung erfolgt mittels der gebräuchlichen Radikalbildner, welche vorzugsweise in Mengen von 0.01 bis 3.0 Gew.-%, bezogen auf das Gesamtgewicht der Monomere, eingesetzt werden. Als Initiatoren werden vorzugsweise anorganische Peroxide wie Ammonium-, Natrium-, Kaliumperoxodisulfat oder Wasserstoffperoxid entweder alleine oder in Kombination mit Reduktionsmitteln wie Natriumsulfit, Natriumhydrogensulfit, Natriumformaldehydsulfoxylat oder Ascorbinsäure verwendet. Es können auch wasserlösliche organische Peroxide, beispielsweise t-Butylhydroperoxid, Cumolhydroperoxid, üblicherweise in Kombination mit Reduktionsmittel, eingesetzt werden, oder aber auch wasserlösliche Azoverbindungen. Bei der Copolymerisation mit gasförmigen Monomeren wie Ethylen und Vinylchlorid wird unter Druck gearbeitet, im allgemeinen zwischen 1 und 100 bar_{abs}.

Der Silikonanteil wird in die Polymerisate eingeführt, in dem vor, während oder nach deren Polymerisation ein silikonhaltiges Vinylalkohol-Mischpolymerisat als Schutzkolloid zugegeben wird, welches
a) 0 bis 60 Gew.-% ein oder mehrere Monomereinheiten von Vinylestern von unverzweigten oder verzweigten Alkylcarbonsäuren mit 1 bis 15 C-Atomen,
b) 20 bis 99.5 Gew.-% Vinylalkohol-Einheiten,
c) 0.5 bis 70 Gew.-% Monomereinheiten von einem oder mehreren Silikonen mit der allgemeinen Formel R¹ₐR₃₋ₐSiO(SiR₂O)ₙSiR₃₋ₐR¹ₐ enthält, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 10 bis 1000, sowie gegebenenfalls weitere Hilfsmonomere enthält,
wobei mindestens ein Silikon mindestens einen Rest R¹ enthält, und wobei sich die Angaben in Gew.-% auf 100 Gew.-% aufaddieren.

Der Vinylester-Anteil beträgt vorzugsweise von 3 bis 35 Gew.-%. Für den Vinylalkohol-Anteil wird der Bereich von 40 bis 90 Gew.-% bevorzugt. Der Anteil der Silikoneinheiten beträgt vorzugsweise von 5 bis 60 Gew.-%, insbesondere 9 bis 50 Gew.-%. n beträgt vorzugsweise 20 bis 500, besonders bevorzugt 40 bis 200.

Bevorzugter Vinylester a) zur Herstellung des silikonhaltigen Vinylalkohol-Mischpolymerisats ist Vinylacetat.

In der allgemeinen Formel R¹ₐR₃₋ₐSiO (SiR₂O)ₙSiR₃₋ₐR¹ₐ sind Beispiele für Reste R Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste wie der n-Hexylrest, Heptylreste wie der n-Heptylrest, Octylreste wie der n-Octylrest und iso-Octylreste wie der 2,2,4-Trimethylpentylrest, Nonylreste wie der n-Nonylrest, Decylreste wie der n-Decylrest, Dodecylreste wie der n-Dodecylrest, und Octadecylreste wie der n-Octadecylrest, Cycloalkylreste wie Cyclopentyl-, Cyclohexyl-, Cycloheptyl- und Methylcyclohexylreste. Bevorzugt handelt es sich bei dem Rest R um einen einwertigen Kohlenwasserstoffrest mit 1 bis 6 Kohlenstoffatomen, wie Methyl-, Ethyl-, n-Propyl-, Isopropyl-, n-Butyl-, sec-Butyl, Amyl- und Hexyl-Rest, wobei der Methylrest besonders bevorzugt ist.

Bevorzugte Alkoxyreste R sind solche mit 1 bis 6 Kohlenstoffatomen wie Methoxy-, Ethoxy-, Propoxy- und n-Butoxyrest, welche gegebenenfalls noch mit Oxyalkylenresten wie Oxyethylen- oder Oxymethylen-Resten substituiert sein können. Besonders bevorzugt werden der Methoxy- und Ethoxyrest. Die genannten Alkylreste und Alkoxyreste R können gegebenenfalls auch substituiert sein, beispielsweise mit Halogen, Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Alkoxysilylgruppen und Hydroxygruppen.

Geeignete polymerisierbare Gruppen R¹ sind Alkenylreste mit 2 bis 8 C-Atomen. Beispiele für solche polymerisierbare Gruppen sind die Vinyl-, Allyl-, Butenyl-, sowie Acryloxyalkyl- und Methacryloxyalkyl-Gruppe, wobei die Alkylreste 1 bis 4 C-Atome enthalten. Bevorzugt werden die Vinylgruppe, 3-Methacryloxypropyl-, Acryloxymethyl- und 3-Acryloxypropyl-Gruppe.

Bevorzugt werden α,ω-Divinyl-Polydimethylsiloxane, α,ω-Di-(3-acryloxypropyl)-Polydimethylsiloxane, α,ω-Di-(3-methacryloxy-propyl)-Polydimethylsiloxane. Bei den nur einfach mit ungesättigten Gruppen substituierten Silikonen sind α-Monovinyl-Polydimethylsiloxane, α-Mono-(3-acryloxypropyl)-Polydimethylsiloxane, α-Mono-(acryloxymethyl)-Polydimethylsiloxane, α-Mono-(3-methacryloxypropyl)-Polydimethylsiloxane bevorzugt. Bei den monofunktionellen Polydimethylsiloxanen befindet sich am anderen Kettenende ein Alkyl- oder Alkoxyrest, beispielsweise ein Methyl- oder Butylrest.

Bevorzugt sind auch Gemische von linearen oder verzweigten Divinyl-Polydimethylsiloxanen mit linearen oder verzweigten Monovinyl-Polydimethylsiloxanen und/oder unfunktionalisierten Polydimethylsiloxanen (letztere besitzen keine polymerisierbare Gruppe), sowie Gemische von linearen oder verzweigten Monovinyl-Polydimethylsiloxanen mit unfunktionalisierten Polydimethylsiloxanen. Die Vinylgruppen befinden sich vorzugsweise am Kettenende. Beispiele für solche Gemische sind Silikone der lösemittelfreien Dehesive^{®}-6-Reihe (verzweigt) oder Dehesive^{®}-9-Reihe (unverzweigt) der Wacker-Chemie GmbH. Bei den binären oder ternären Gemischen beträgt der Anteil der unfunktionellen Polydialkylsiloxane bis zu 15 Gew.-%, vorzugsweise bis zu 5 Gew.-%; der Anteil der monofunktionellen Polydialkylsiloxane bis zu 50 Gew.-%; und der Anteil der difunktionellen Polydialkylsiloxane mindestens 50 Gew.-%, vorzugsweise mindestens 60 Gew.-%, jeweils bezogen auf das Gesamtgewicht des Silikonanteils.

Am meisten bevorzugt als Silikoneinheiten werden α,ω-Divinyl-Polydimethylsiloxane, oder ein binäres Gemisch von α,ω-Divinyl-Polydimethylsiloxanen mit α-Monovinyl-Polydimethylsiloxanen, oder ein ternäres Gemisch von α,ω-Divinyl-Polydimethylsiloxanen, α-Monovinyl-Polydimethylsiloxanen mit unfunktionalisiertem Polydimethysiloxan.

Neben diesen Monomeren können zusätzlich noch weitere Hilfsmonomere in dem silikonhaltigen Vinylalkohol-Mischpolymerisat copolymerisiert werden. Geeignete Hilfsmonomere sind die, welche bereits für die Polymerisate ethylenisch ungesättigter Monomere genannt wurden, in den dort genannten Mengen.

Am meisten bevorzugt werden silikonhaltige Vinylalkohol-Mischpolymerisate, welche Vinylacetat-, Vinylalkohol- und Polydimethylsiloxan-Einheiten enthalten. Im allgemeinen werden die silikonhaltigen Mischpolymerisate in einer Menge 0.01 bis 40 Gew.-%, vorzugsweise 0.1 bis 10 Gew.-%, vor, während oder nach der Polymerisation eingesetzt.

Die Herstellung der silikonhaltigen Vinylalkohol-Mischpolymerisate wird in der DE 10215962 beschrieben. Sie erfolgt mittels Polymerisation der genannten Vinylester und der Silikoneinheiten in einem nichtwässrigen, organischen Lösungsmittel, und anschließender Verseifung der damit erhaltenen Copolymerisate in alkoholischer Lösung zur Einführung der Vinylalkohol-Einheiten.

Wird das eben beschriebene silikonhaltige Vinylalkohol-Mischpolymerisat vor oder während der Polymerisation als Schutzkolloid eingesetzt, so können zur Stabilisierung der Polymerisate neben dem silikonhaltigen Vinylalkohol-Mischpolymerisat zusätzlich anionische und nichtionische Emulgatoren sowie weitere Schutzkolloide verwendet werden. Bevorzugt werden nichtionische oder anionische Emulgatoren eingesetzt, vorzugsweise eine Mischung aus nichtionischen und anionischen Emulgatoren. Als nichtionische Emulgatoren werden bevorzugt kondensationsprodukte von Ethylenoxid oder Propylenoxid mit linearen oder verzweigten Alkoholen mit 8 bis 18 Kohlenstoffatomen, Alkylphenolen oder linearen oder verzweigten Carbonsäuren von 8 bis 18 Kohlenstoffatomen eingesetzt, sowie Blockcopolymere von Ethylenoxid und Propylenoxid eingesetzt. Geeignete anionische Emulgatoren sind beispielsweise Alkylsulfate, Alkylsulfonate, Alkylarylsulfate, sowie Sulfate oder Phosphate von Kondensationsprodukten des Ethylenoxides mit linearen oder verzweigten Alkylalkoholen und mit 5 bis 25 EO-Einheiten, Alkylphenolen, und Mono- oder Diester der Sulfobernsteinsäure. Die Emulgatormenge beträgt 0.01 bis 10 Gew.-%, bezogen auf das Gesamtgewicht der eingesetzten Monomere.

Gegebenenfalls können neben dem silikonhaltigen Vinylalkohol-Mischpolymerisat noch weitere Schutzkolloide eingesetzt werden. Beispiele für geeignete Schutzkolloide sind Polyvinylalkohole mit einem Gehalt von 75 bis 95 Mol-%, bevorzugt 84 bis 92 Mol-%, Vinylalkoholeinheiten; Poly-N-Vinylamide wie Polyvinylpyrrolidone; Polysaccharide wie Stärken, sowie Cellulosen und deren Carboxymethyl-, Methyl-, Hydroxyethyl-, Hydroxypropyl-Derivate; synthetische Polymere wie Poly(meth)acrylsäure, Poly(meth)acrylamid. Besonders bevorzugt wird der Einsatz der genannten Polyvinylalkohole. Die Schutzkolloide werden im allgemeinen in einer Menge von 0.01 bis 40 Gew.-%, bezogen auf das Gesamtgewicht der eingesetzten Monomere, eingesetzt.

Gegebenenfalls können zur Steuerung des Molekulargewichts die üblichen Regler verwendet werden, beispielsweise Alkohole wie Isopropanol, Aldehyde wie Acetaldehyd, chlorhaltige Verbindungen, Mercaptane wie n-Dodecylmercaptan, t-Dodecylmercaptan, Mercaptopropionsäure(ester). Zur Einstellung des pH-Wertes können bei der Herstellung der Dispersion pHregulierende Verbindungen wie Natriumacetat oder Ameisensäure eingesetzt werden.

Die Polymerisation kann unabhängig vom Polymerisationsverfahren mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Die Comonomeren und ggf. die Hilfsmonomeren können zur Herstellung der Dispersion alle vorgelegt werden (Batch-Prozess), oder es wird ein Teil der Monomeren vorgelegt und der Rest dosiert (Semibatch-Prozess).

Die silikonhaltigen Vinylalkohol-Mischpolymerisate können zur Herstellung der Dispersion vorgelegt werden oder zudosiert werden, oder es wird ein Teil vorgelegt und der Rest dosiert. Dabei können die oberflächenaktiven Substanzen allein oder als Voremulsion mit den Comonomeren dosiert werden.

Bei der Copolymerisation von gasförmigen Monomeren a) wie Ethylen wird die gewünschte Menge durch die Einstellung eines bestimmten Drucks eingebracht. Der Druck, mit dem das gasförmige Monomer eingebracht wird, kann anfangs auf einen bestimmten Wert eingestellt werden und sich während der Polymerisation abbauen, oder der Druck wird während der gesamten Polymerisation konstant gelassen. Letztere Ausführungsform ist bevorzugt.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere und weitere flüchtige, nichtwässrige Bestandteile der Dispersion können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 30 bis 70 Gew.-%, vorzugsweise von 45 bis 65 Gew.-%. Zur Herstellung von Polymerpulvern, insbesondere in Wasser redispergierbaren Polymerpulvern, werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Geeignete Verdüsungshilfen sind die bereits genannten Schutzkolloide. Besonders bevorzugt ist auch der Einsatz der silikonhaltigen Vinylalkohol-Mischpolymerisate als Verdüsungshilfe.

Bei der Verdüsung hat sich vielfach ein Gehalt von bis zu 1.5 Gew.-% Antischaummittel, bezogen auf das Basispolymerisat, als günstig erwiesen. Zur Verbesserung der Verblockungsstabilität kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate.

Es werden Emulsionspolymerisate erhalten, die hydrophob, witterungsstabil, wasserabweisend, sehr beständig, und nicht verschmutzend sind und darüber hinaus eine gute Wasserdampfdurchlässigkeit aufweisen.

Die silikonhaltigen Polymerisate in Form deren wässrigen Dispersionen und in Form deren Polymerpulver, insbesondere in Wasser redispergierbaren Polymerpulvern, eignen sich zur Anwendung in Klebemitteln und Beschichtungsmitteln, zur Verfestigung von Fasern oder anderen partikulären Materialien, beispielsweise für den Textilbereich. Sie eignen sich auch als Modifizierungsmittel und als Hydrophobierungsmittel. Sie können ferner im Bereich Polish (Poliermittel), und in der Kosmetik, z.B. im Bereich Haarpflege, vorteilhaft eingesetzt werden. Sie sind weiter geeignet als Bindemittel in Klebemitteln und Beschichtungsmitteln, auch als Schutzbeschichtung z.B. für Metalle, Folien, Holz oder Releasebeschichtung z.B. zur Papierbehandung. Besonders geeignet sind sie als Bindemittel für Anstrich-, Klebe- und Beschichtungsmittel im Baubereich, beispielsweise in Fliesenklebern und Vollwärmeschutzklebemittel, und insbesondere für die Anwendung in emissionsarmen Kunststoffdispersionsfarben und Kunststoffdispersionsputzen, sowohl für den Innenbereich wie den Aussenbereich. Die Rezepturen für Dispersionsfarben und Dispersionsputze sind dem Fachmann bekannt, und enthalten im allgemeinen 5 bis 50 Gew.-% der silikonhaltigen Polymerisate, 5 bis 35 Gew.-% Wasser, 5 bis 80 Gew.-% Füllstoff, 5 bis 30 Gew.-% Pigmente sowie 0.1 bis 10 Gew.-% weitere Zusatzstoffe, wobei sich die Angaben in Gew.-% in der Rezeptur auf 100 Gew.-% aufaddieren.

Beispiele für einsetzbare Füllstoffe sind Carbonate wie Calciumcarbonat in Form von Dolomit, Calcit und Kreide. Weitere Beispiele sind Silikate, wie Magnesiumsilikat in Form von Talkum, oder Aluminiumsilikate wie Lehm und Tone; Quarzmehl, Quarzsand, hochdisperse Kieselsäure, Feldspat, Schwerspat und Leichtspat. Geeignet sind auch Faserfüllstoffe. In der Praxis werden häufig Gemische verschiedener Füllstoffe eingesetzt. Beispielsweise Gemische von Füllstoffen unterschiedlicher Teilchengröße oder Gemische von carbonatischen und silikatischen Füllstoffen. Im letzteren Fall spricht man bei einem Anteil von mehr als 50 Gew.-%, insbesondere mehr als 75 Gew.-% Carbonat bzw. Silikat am Gesamtfüllstoffanteil von carbonatreichen bzw. silikatreichen Rezepturen. Kunststoffputze enthalten im allgemeinen grobkörnigere Füllstoffe als Dispersionsfarben. Die Körnung liegt dabei oftmals zwischen 0.2 und 5.0 mm. Ansonsten können Kunststoffputze die selben Zusatzstoffe wie Dispersionsfarben enthalten.

Geeignete Pigmente sind beispielsweise Titandioxid, Zinkoxid, Eisenoxide, Ruß als anorganische Pigmente, sowie die gebräuchlichen organischen Pigmente. Beispiele für weitere Zusatzstoffe sind Netzmittel in Anteilen von im allgemeinen 0.1 bis 0.5 Gew.-%, bezogen auf das Gesamtgewicht der Rezeptur. Beispiele hierfür sind Natrium- und Kaliumpolyphosphate, Polyacrylsäuren und deren Salze. Als Zusatzstoffe sind auch Verdickungsmittel zu nennen, welche im allgemeinen in einer Menge von 0.01 bis 2.0 Gew.-%, bezogen auf das Gesamtgewicht der Rezeptur, eingesetzt werden. Gebräuchliche Verdickungsmittel sind Celluloseether, Stärken, oder Bentonit als Beispiel für ein anorganisches Verdickungsmittel. Weitere Zusatzstoffe sind Konservierungsmittel, Entschäumer, Gefrierschutzmittel.

Zur Herstellung der Klebe- und Beschichtungsmittel wird die Polymerdispersion oder das Polymerpulver mit den weiteren Rezepturbestandteilen Füllstoff und weiteren Zuschlägen in geeigneten Mischern gemischt und homogenisiert. Das Polymerpulver kann gegebenenfalls auch in Form einer wässrigen Redispersion auf der Baustelle zugegeben werden. In vielen Fällen wird eine Trockenmischung hergestellt und das zur Verarbeitung erforderliche Wasser unmittelbar vor der Verarbeitung hinzugefügt. Bei der Herstellung von pastösen Massen wird häufig zunächst der Wasseranteil vorgelegt, die Dispersion zugegeben und abschließend die Feststoffe eingerührt.

Besonders vorteilhaft sind die silikonhaltigen Polymerisate als Bindemittel in Beschichtungsmittel-Rezepturen für emissionsarme Innenfarben, insbesondere solchen mit hoher PVK (hochgefüllte Farben), oder als hydrophobierend wirkendes Bindemittel für Putze geeignet.

Die nachfolgenden Beispiele dienen zur weiteren Erläuterung der Erfindung, ohne diese in irgendeiner Weise einzuschränken.

### Herstellung der silikonhaltigen Vinylalkohol-Mischpolymerisate:

### 1. Herstellung von Vinylacetat-Polydimethylsiloxan-Copolymerisaten:

### Beispiel a):

In einem 1201-Rührkessel mit Ankerrührer, Rückflußkühler und Dosiereinrichtungen wurden 54.65 kg Ethylacetat, 303.33 g PDMS-Gemisch (= Dehesive^{®} 929), 5.47 kg Isopropanol, 44.71 g PPV (t-Butylperpivalat, 75 %-ige Lösung in Aliphaten) und 2.73 kg Vinylacetat vorgelegt. Anschließend wurde die Vorlage bei einer Rührerdrehzahl von 95 Upm auf 70°C aufgeheizt. Nach Erreichen der Innentemperatur von 70°C wurde die Initiatordosierung (4.10 kg Ethylacetat und 173.91 g PPV) mit einer Rate von 826 g/h gestartet. Zehn Minuten nach dem Start der Initiatordosierung wurde die Monomerdosierung (2.43 kg PDMS-Gemisch und 21.86 kg Vinylacetat) mit einer Rate von 6.08 kg/h eingefahren. Die Initiatordosierung erstreckte sich über einen Zeitraum von 310 min, die Monomerdosierung endete 60 min früher. Nach Ende beider Dosierungen wurde noch 120 min bei 70°C nachpolymerisiert. Die erhaltene Polymerlösung wurde anschließend aufgeheizt zum Destillieren (Lösungsmittelaustausch), wobei das Destillat immer wieder durch Methanol ersetzt wurde. Dieser Vorgang wurde wiederholt, bis die Lösung frei von Ethylacetat und Isopropanol war. Analysen: Festgehalt (FG): 45.6 % (in Methanol), GC-Analyse: Rest-VAc-Gehalt 20 ppm; Rest-Ethylacetat: 1100 ppm, Säurezahl (SZ): 3.36 mgKOH/g, Viskosität (Höppler, 10 %-ige Lösung in Ethylacetat) = 1.34 mPas; SEC M_{w}= 13502 g/mol, Mₙ = 5075 g/iriol, Polydispersität = 2.66;
Glasübergangstemperatur (Tg): Tg = 30.1°C.
Zusammensetzung des Harzes laut ¹H-NMR (CDCl₃): 10.75 Gew.-% (12.28 mol-%) PDMS, 89.25 Gew.-% (87.72 mol-%) PVAc.

### Beispiel b):

In einem 1201-Rührkessel mit Ankerrührer, Rückflußkühler und Dosiereinrichtungen wurden 51.57 kg Ethylacetat, 481.63 g PDMS-Gemisch (Dehesive 929), 8.09 kg Isopropanol, 51.78 g PPV (t-Butylperpivalat, 75 %-ige Lösung in Aliphaten) und 2.53 kg Vinylacetat vorgelegt. Anschließend wurde die Vorlage bei einer Rührerdrehzahl von 95 Upm auf 70°C aufgeheizt. Nach Erreichen der Innentemperatur von 70°C wurde die Initiatordosierung (4.07 kg Ethylacetat und 201.33 g PPV) mit einer Rate von 827 g/h gestartet. Zehn Minuten nach dem Start der Initiatordosierung wurde die Monomerdosierung (3.86 kg PDMS-Gemisch und 20.25 kg Vinylacetat) mit einer Rate von 6.03 kg/h eingefahren. Die Initiatordosierung erstreckte sich über einen Zeitraum von 310 min, die Monomerdosierung endete 60 min früher. Nach Ende beider Dosierungen wurde noch 120 min bei 70°C nachpolymerisiert. Die erhaltene Polymerlösung wurde anschließend aufgeheizt zum Destillieren (Lösungsmittelaustausch), wobei das Destillat immer wieder durch Methanol ersetzt wurde. Dieser Vorgang wurde wiederholt, bis die Lösung frei von Ethylacetat und Isopropanol war. Analysen: FG: 50.0 % (in Methanol), GC-Analyse: Rest-VAc-Gehalt 420 ppm; Rest-Ethylacetat: 1.06 %, Säurezahl 2.80 mgKOH/g, Viskosität (Höppler, 10 %-ige Lösung in Ethylacetat) = 1.39 mPas; SEC M_{w}= 13640 g/mol, Mₙ = 4497 g/mol, Polydispersität = 3.03;
Glasübergangstemperatur (Tg): Tg = 28.6°C
Zusammensetzung des Harzes laut ¹H-NMR (CDCl₃): 17.46 Gew.-% (19.75 mol-%) PDMS, 82.54 Gew.-% (80.25 mol-%) PVAc.

### Beispiel c):

In einem 1201-Rührkessel mit Ankerrührer, Rückflußkühler und Dosiereinrichtungen wurden 49.97 kg Ethylacetat, 651.01 g PDMS-Gemisch (Dehesive 929), 9.38 kg Isopropanol, 58.88 g PPV (t-Butylperpivalat, 75 %-ige Lösung in Aliphaten) und 2.34 kg Vinylacetat vorgelegt. Anschließend wurde die Vorlage bei einer Rührerdrehzahl von 95 Upm auf 70°C aufgeheizt. Nach Erreichen der Innentemperatur von 70°C wurde die Initiatordosierung (4.05 kg Ethylacetat und 228.88 g PPV) mit einer Rate von 829 g/h gestartet. Zehn Minuten nach dem Start der Initiatordosierung wurde die Monomerdosierung (5.21 kg PDMS-Gemisch und 18.77 kg Vinylacetat) mit einer Rate von 6.0 kg/h eingefahren. Die Initiatordosierung erstreckte sich über einen Zeitraum von 310 Min, die Monomerdosierung endete 60 Min früher. Nach Ende beider Dosierungen wurde noch 120 Min bei 70°C nachpolymerisiert. Die erhaltene Polymerlösung wurde anschließend aufgeheizt zum Destillieren (Lösungsmittelaustausch), wobei das Destillat immer wieder durch Methanol ersetzt wurde. Dieser Vorgang wurde wiederholt, bis die Lösung frei von Ethylacetat und Isopropanol war. Analysen: FG: 52.9 % (in Methanol), GC-Analyse: Rest-VAc-Gehalt 60 ppm; Rest-Ethylacetat: 2.0 %, SZ: 2.24 mg KOH/g, Viskosität(Höppler, 10 %-ige Lösung in Ethylacetat) = 1.23 mPas; SEC M_{w}= 10777 g/mol, Mₙ = 3626 g/mol, Polydispersität = 2.97;
Glasübergangstemperatur (Tg): Tg = 26.2°C
Zusammensetzung des Harzes laut ¹H-NMR (CDCl₃): 22.56 Gew.-% (25.31 mol-%) PDMS, 77.44 Gew.-% (74.69 mol-%) PVAc.

### 2. Verseifung der Vinylacetat-Polydimethylsiloxan-Copolymerisate zur Herstellung der silikonhaltigen Vinylalkohol-Mischpolymerisate:

### Beispiel d) (17.8 Gew.-% Silikon):

In einem 1201-Rührkessel (drucklos), mit Rückflußkühler, Dosiereinrichtungen und einem Ankerrührer, wurden 26.3 kg einer 45.6 %-igen Polymerlösung in Methanol - hergestellt nach Beispiel a) - vorgelegt und auf einen FG von ca. 20 % mit Methanol verdünnt. Diese Lösung wurde dann auf 35 °C aufgeheizt. Anschließend wurden 220 ml 45 %-ige wässrig/methanolische Natronlauge schnell zugegeben. 11 min nach der Laugenzugabe wurde mit konz. Essigsäure auf einen pH von ca. 7 eingestellt. Um den gefällten Polyvinylalkohol als wässrige Lösung zu erhalten, wurde die Suspension aufgeheizt zum Destillieren und das Destillat sukzessive durch Wasser ersetzt. Dieser Vorgang wurde wiederholt, bis das gesamte Methanol durch Wasser ersetzt worden war.
Wässrige PVA-Lösung - Analysen:
FG: 11.3 %; SZ: 0 mgKOH/g; pH(4 %-ig in Wasser): 6.5; Verseifungszahl (VZ): 87.15 mgKOH/g;
VOC (volatile organic compounds) (Methanol): 8 ppm Zusammensetzung laut ¹H-NMR (in DMSO mit Trifluoressigsäure als Shift-Reagenz): 13.9 Gew.-% (8.2 mol-%) Vinylacetat, 68.3 Gew.-% (79.5 mol-%) Vinylalkohol, 17.8 Gew.-% (12.3 mol-%) PDMS.

### Beispiel e) (26.0 Gew.-% Silikon):

Fahrweise wie Beispiel d) jedoch 13 min Verseifungszeit. Verseift wurde das Harz aus Beispiel b).
Wässrige PVA-Lösung - Analysen:
FG: 11.4 %; SZ: 0 mgKOH/g; pH(4 %-ig in Wasser): 6.74; VZ: 96.33 mgKOH/g;
VOC (Methanol): 590 ppm
Zusammensetzung laut ¹H-NMR (in DMSO mit Trifluoressigsäure als Shift-Reagenz): 15.0 Gew.-% (9.3 mol-%) Vinylacetat, 59.0 Gew.-% (71.8 mol-%) Vinylalkohol, 26.0 Gew.-% (18.9 mol-%) PDMS.

### Beispiel f) (31.3 Gew.-% Silikon):

Fahrweise wie Beispiel d) jedoch 11 min Verseifungszeit. Verseift wurde das Harz aus Beispiel c).
Wässrige PVA-Lösung - Analysen:
FG: 10.95 %; SZ: 0 mgKOH/g; pH (4 %-ig in Wasser): 6.79; VZ: 45.5 mgKOH/g;
VOC (Methanol): nicht ermittelt
Zusammensetzung laut ¹H-NMR (in DMSO mit Trifluoressigsäure als Shift-Reagenz): 5.4 Gew.-% (3.2 mol-%) Vinylacetat, 63.3 Gew.-% (74.8 mol-%) Vinylalkohol, 31.3 Gew.-% (22.0 mol-%) PDMS.

Herstellung von Polymerdispersionen und Polymerpulvern mit den silikonhaltigen Polyvinylalkoholen:

### Rohstoffe:

### Genapol X 150:

Ethoxylierter Isotridecylalkohol mit einem Ethoxylierungsgrad von 15.

### Mersolat:

Na-Alkylsulfonat mit 12 bis 14 C-Atomen im Alkylrest.

### Airvol 513:

Handelsüblicher Polyvinylalkohol (von Air Products & Chemicals) mit einer Viskosität von ca. 14 mPas (20°C, 4 %-ige Lösung, gemessen nach Höppler) und einer Verseifungszahl von 140 (mg KOH/g Polymer) (Hydrolysegrad 88 Mol-%).

### G04/140:

Handelsüblicher Polyvinylalkohol (von Clariant) mit einer Viskosität von ca. 4 mPas (20°C, 4 %-ige Lösung, gemessen nach Höppler) und einer Verseifungszahl von 140 (mg KOH/g Polymer) (Hydrolysegrad 88 Mol-%).

### Polyvinylalkohol W25/140:

Polyvinylalkohol mit einer Viskosität von ca. 25 mPas (20°C, 4 %-ige Lösung, gemessen nach Höppler) und einer Verseifungszahl von 140 (mg KOH/g Polymer) (Hydrolysegrad 88 Mol-%).

### Genapol PF80:

EO-PO-Blockpolymerisat mit 80 % EO.

### PDMS-Mischung (Dehesive^{®} 929):

Gemisch dreier Polydimethylsiloxane mit ca. 100 SiOMe₂-Einheiten, das 5 Gew.-% unfunktionalisiertes Polydimethylsiloxan, 20 Gew.-% α-monovinyl-funktionalisiertes Polydimethylsiloxan und 75 Gew.-% α,ω-divinyl-funktionalisiertes Polydimethylsiloxan enthält.

### Vergleichsbeispiel 1:

### Polyvinylalkohol-stabilisiertes Vinylacetat-Ethylen-Vinylsilan-GMA-Copolymer (ohne silikonhaltiges Vinylalkohol-Mischpolymerisat)

In einem 191-Druckautoklaven wurden 3,64 kg Wasser, 177.44 g Genapol X 150 (40 %-ige wässrige Lösung), 164.52 g Mersolat (40 %-ige wäßrige Lösung), 70.97 g Natriumvinylsulfonat (25 %-ig) und 887.18 g Vinylacetat vorgelegt. Mit 10 %-iger Ameisensäure wurde auf pH = 5 eingestellt. Ferner wurden 9.7 ml Trilon B (EDTA; 2 %-ige wäßrige Lösung) und 30.6 ml Eisenammonsulfat (1 %-ige Lösung) zugegeben. Der Kessel wurde auf 70°C aufgeheizt und es wurden 22 bar Ethylen aufgedrückt. Sobald sich der Reaktor im thermischen Gleichgewicht befand, wurde eine 5.4 %-ige Ammoniumperoxodisulfatlösung (APS-Lösung) mit 68 g pro Stunde und eine 4,16 %-ige Natriumsulfitlösung mit 85 g pro Stunde eingefahren. 25 Minuten später wurde begonnen, eine Mischung von 6.92 kg Vinylacetat und 45.26 g Vinyltrimethoxysilan (Wacker Silan XL 10) mit einer Rate von 1202 g pro Stunde zu dosieren (Monomerdosierung). Gleichzeitig wurde eine Emulgatordosierung mit einer Dosierleistung von 331 g pro Stunde eingefahren. Die Emulgatordosierung enthielt 385.92 g Wasser, 931.54 g Genapol X 150 (40 %-ige wässrige Lösung) und 501.26 g G 04/140 (Polyvinylalkohol; 20 %-ige Lösung).
Die Gesamtdosierzeit für die Monomerdosierung betrug 5.8 h und für die Emulgatordosierung 5.5 h.
15 min nach dem Reaktionsbeginn wurde die APS-Dosierung auf 42.2 g pro Stunde, die Na-Sulfit-Dosierung auf 52.7 g pro Stunde reduziert.
30 Minuten nach dem Ende der Emulgatordosierung wurde die "GMA-Dosierung" eingefahren. Zusammensetzung der "GMA-Dosierung": 177.44 g Vinylacetat und 53.23 g Glycidylmethacrylat. Die Dosierzeit betrug 30 Minuten (Rate: 462 g pro Stunde). Nach dem Ende der "GMA-Dosierung" wurde die APS- und Na-Sulfitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.
Dispersionsanalysen: siehe Tabelle 1

### Vergleichsbeispiel 2:

### Polyvinylalkohol-stabilisiertes Vinylacetat-VeoVA-Ethylen-Vinylsilan-GMA-PDMS-Copolymer (ohne silikonhaltiges Vinylalkohol-Mischpolymerisat):

In einem 5721-Druckautoklaven wurden 76.80 kg Wasser, 27.12 kg W 25/140 (Polyvinylalkohol; 10 %-ige Lösung), 4.80 kg Genapol X 150 (40 %-ige wässrige Lösung), 3.44 kg Mersolat (40 %-ige wässrige Lösung), 1.92 kg Natriumvinylsulfonat (25 %-ig), 18.00 kg Vinylacetat, 4.80 kg PDMS-Mischung und 18.00 kg VeoVa 10 vorgelegt. Mit 10 %-iger Ameisensäure wurde auf pH = 5 eingestellt. Ferner wurden 314 ml Trilon B (EDTA; 2 %-ige wässrige Lösung) und 991 ml Eisenammonsulfat (1 %-ige Lösung) zugegeben. Der Kessel wurde auf 70°C aufgeheizt und es wurden 13 bar Ethylen aufgedrückt. Sobald sich der Reaktor im thermischen Gleichgewicht befand, wurde eine 10.0 %-ige Ammoniumperoxodisulfatlösung (APS-Lösung) mit 1023 g pro Stunde und eine 5.05 %-ige Natriumsulfitlösung mit 1976 g pro Stunde eingefahren. 25 Minuten später wurde begonnen, eine Mischung von 166.80 kg Vinylacetat, 29.28 kg VeoVa 10 und 1.22 kg Vinyltrimethoxysilan (Wacker Silan XL 10) mit einer Rate von 34.02 kg pro Stunde zu dosieren (Monomerdosierung). Gleichzeitig wurde eine Emulgatordosierung mit einer Dosierleistung von 12.89 kg pro Stunde eingefahren. Die Emulgatordosierung enthielt 45.69 kg Wasser und 25.20 kg Genapol X 150 (40 %-ige wässrige Lösung). Die Gesamtdosierzeit für die Monomerdosierung betrug 5.8 h und für die Emulgatordosierung 5.5 h.
15 min nach dem Reaktionsbeginn wurde die APS-Dosierung auf 636 g pro Stunde, die Na-Sulfit-Dosierung auf 1226 g pro Stunde reduziert.
30 Minuten nach dem Ende der Emulgatordosierung wurde die "GMA-Dosierung" eingefahren. Zusammensetzung der "GMA-Dosierung": 4.80 kg Vinylacetat, 720.01 g Veova 10 und 2.88 kg Glycidylmethacrylat. Die Dosierzeit betrug 30 Minuten (Rate: 16.8 kg pro Stunde). Nach dem Ende der "GMA-Dosierung" wurde die APS- und Na-Sulfitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert. Dispersionsanalysen: siehe Tabelle 1

### Vergleichsbeispiel 3:

### Polyvinylalkohol-stabilisiertes Vinylacetat-Ethylen-Vinylsilan-GMA-Copolymer (ohne silikonhaltiges Vinylalkohol-Mischpolymerisat):

In einem 5721-Druckautoklaven wurden 102.99 kg Wasser, 17.90 kg Genapol X 150 (40 %-ige wässrige Lösung), 3.54 kg Mersolat (40 %-ige wässrige Lösung), 1.97 kg Natriumvinylsulfonat (25 %-ig), 13.95 kg W 25/140 (Polyvinylalkohol, 10 %-ig in Wasser) und 24.69 kg Vinylacetat vorgelegt. Mit 10 %-iger Ameisensäure wurde auf pH = 5 eingestellt. Ferner wurden 314 ml Trilon B (EDTA; 2 %-ige,wässrige Lösung) und 991 ml Eisenammonsulfat (1 %-ige Lösung) zugegeben. Der Kessel wurde auf 70°C aufgeheizt und es wurden 22 bar Ethylen aufgedrückt. Sobald sich der Reaktor im thermischen Gleichgewicht befand, wurde eine 10.0 %-ige Ammoniumperoxodisulfatlösung (APS-Lösung) mit 1023 g pro Stunde und eine 5.05 %-ige Natriumsulfitlösung mit 1976 g pro Stunde eingefahren. 25 Minuten später wurde begonnen, eine Mischung von 217.25 kg Vinylacetat und 1.25 kg Vinyltrimethoxysilan (Wacker Silan XL 10) mit einer Rate von 41.23 kg pro Stunde zu dosieren (Monomerdosierung). Gleichzeitig wurde eine Emulgatordosierung mit einer Dosierleistung von 9.85 kg pro Stunde eingefahren. Die Emulgatordosierung enthielt 22.34 kg Wasser, 12.96 kg Genapol X 150 (40 %-ige wässrige Lösung) und 13.95 kg W 25/140 (Polyvinylalkohol; 10 %-ige Lösung).
Die Gesamtdosierzeit für die Monomerdosierung betrug 5.3 h und für die Emulgatordosierung 5.0 h.
15 min nach dem Reaktionsbeginn wurde die APS-Dosierung auf 636 g pro Stunde, die Na-Sulfit-Dosierung auf 1226 g pro Stunde reduziert.
30 Minuten nach dem Ende der Emulgatordosierung wurde die "GMA-Dosierung" eingefahren. Zusammensetzung der "GMA-Dosierung": 4.94 kg Vinylacetat und 1,48 kg Glycidylmethacrylat. Die Dosierzeit betrug 30 Minuten (Rate: 12.84 kg pro Stunde). Nach dem Ende der "GMA-Dosierung" wurde die APS- und Na-Sulfitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.
Dispersionsanalysen: siehe Tabelle 1

### Vergleichsbeispiel 4:

### Polyvinylalkohol-stabilisiertes Vinylacetat-Ethylen-Vinylsilan-GMA-Copolymer (ohne silikonhaltiges Vinylalkohol-Mischpolymerisat):

In einem 19 Liter Druckautoklaven wurden 3.53 kg Wasser, 176.30 g Genapol X 150 (40 %-ige wässrige Lösung), 163.47 g Mersolat (40 %-ige wässrige Lösung), 70.52 g Natriumvinylsulfonat (25 %-ig) und 881.52 g Vinylacetat vorgelegt. Mit 10 %-iger Ameisensäure wurde auf pH = 5 eingestellt. Ferner wurden 9.7 ml Trilon B (EDTA; 2 %-ige wässrige Lösung) und 30.6 ml Eisenammonsulfat (1 %-ige Lösung) zugegeben. Der Kessel wurde auf 70°C aufgeheizt und es wurden 22 bar Ethylen aufgedrückt. Sobald sich der Reaktor im thermischen Gleichgewicht befand, wurde eine 5,4 %-ige Ammoniumperoxodisulfatlösung (APS-Lösung) mit 68 g pro Stunde und eine 4.16 %-ige Natriumsulfitlösung mit 85 g pro Stunde eingefahren. 25 Minuten später wurde begonnen, eine Mischung von 6.88 kg Vinylacetat und 44.98 g Vinyltrimethoxysilan (Wacker Silan XL 10) mit einer Rate von 1194 g pro Stunde zu dosieren (Monomerdosierung).
Gleichzeitig wurde eine Emulgatordosierung mit einer Dosierleistung von 359 g pro Stunde eingefahren. Die Emulgatordosierung enthielt 925.60 g Genapol X 150 (40 %-ige wässrige Lösung) und 1050 g Airvol V513 (Polyvinylalkohol; 9.5 %-ige Lösung).
Die Gesamtdosierzeit für die Monomerdosierung betrug 5.8 h und für die Emulgatordosierung 5.5 h.
15 min nach dem Reaktionsbeginn wurde die APS-Dosierung auf 4.2 pro Stunde, die Na-Sulfit-Dosierung auf 52.7 g pro Stunde reduziert.
30 Minuten nach dem Ende der Emulgatordosierung wurde die "GMA-Dosierung" eingefahren. Zusammensetzung der "GMA-Dosierung": 176.30 g Vinylacetat und 52.89 g Glycidylmethacrylat. Die Dosierzeit betrug 30 Minuten (Rate: 459 g pro Stunde). Nach dem Ende der "GMA-Dosierung" wurde die APS- und Na-Sulfitdosierung noch 1 Stunde fortgesetzt. Nach dem Entspannen wurde die Dispersion zur Restmonomer-minimierung mit Wasserdampf behandelt ("gestrippt") und anschließend mit Hydorol W konserviert.
Dispersionsanalysen: siehe Tabelle 1

### Beispiel 1:

Fahrweise wie Vergleichsbeispiel 1. Es wurden nur 100.11 g des silikonhaltigen Polyvinylalkohols aus Beispiel d) statt des Polyvinylalkohols G04/140 verwendet.
Dispersionsanalysen: siehe Tabelle 1.

### Beispiel 2:

Fahrweise wie Vergleichsbeispiel 1. Es wurden nur 100.16 g des silikonhaltigens Polyvinylalkohol aus Beispiel e) statt des Polyvinylalkohols G04/140 verwendet.
Dispersionsanalysen: siehe Tabelle 1.

### Beispiel 3:

Polyvinylalkohol-stabilisiertes Vinylacetat-Ethylen-Vinylsilan-GMA-Copolymer mit silikonhaltigem Vinylalkohol-Mischpolymerisat als Schutzkolloid
In einem 191-Druckautoklaven wurden 2.08 kg Wasser, 204.12 g Genapol X 150 (40 %-ige wässrige Lösung), 151.41 g Mersolat (40 %-ige wässrige Lösung), 809.32 g silikonhaltiger Polyvinylalkohol aus Beispiel e) (11.4 % in Wasser), 65.32 g Natriumvinylsulfonat (25 %-ig) und 816.48 g Vinylacetat vorgelegt. Mit 10 %-iger Ameisensäure wurde auf pH = 5 eingestellt. Ferner wurden 9.7 ml Trilon B (EDTA; 2 %-ige wässrige Lösung) und 30.6 ml Eisenammonsulfat (1 %-ige Lösung) zugegeben. Der Kessel wurde auf 70°C aufgeheizt und es wurden 22 bar Ethylen aufgedrückt. Sobald sich der Reaktor im thermischen Gleichgewicht befand, wurde eine 5.4 %-ige Ammoniumperoxodisulfatlösung (APS-Lösung) mit 68 g pro Stunde und eine 4.16 %-ige Natriumsulfitlösung mit 85 g pro Stunde eingefahren. 25 Minuten später wurde begonnen, eine Mischung von 7.19 kg Vinylacetat und 41.66 g Vinyltrimethoxysilan (Wacker Silan XL 10) mit einer Rate von 1247 g pro Stunde zu dosieren (Monomerdosierung).
Gleichzeitig wurde eine Emulgatordosierung mit einer Dosierleistung von 464 g pro Stunde eingefahren. Die Emulgatordosierung enthielt 919.14 g Wasser und 1.63 kg Genapol PF 80 (20 %-ige wässrige Lösung).
Die Gesamtdosierzeit für die Monomerdosierung betrug 5.8 h und für die Emulgatordosierung 5.5 h.
15 min nach dem Reaktionsbeginn wurde die APS-Dosierung auf 42.2 g pro Stunde, die Na-Sulfit-Dosierung auf 52.7 g pro Stunde reduziert.
30 Minuten nach dem Ende der Emulgatordosierung wurde die "GMA-Dosierung" eingefahren. Zusammensetzung der "GMA-Dosierung": 163.3 g Vinylacetat und 48.99 g Glycidylmethacrylat. Die Dosierzeit betrug 30 Minuten (Rate: 425 g pro Stunde). Nach dem Ende der "GMA-Dosierung" wurde die APS- und Na-Sulfitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.
Dispersionsanalysen: siehe Tabelle 1

### Beispiel 4:

Fahrweise wie in Beispiel 3. Es wurden nur 92.22 g des silikonhaltigen Polyvinylalkohols aus Beispiel d) statt dem silikonhaltigen Polyvinylalkohol aus Beispiel e) verwendet. Dispersionsanalysen: siehe Tabelle 1.

### Beispiel 5:

Fahrweise wie Vergleichsbeispiel 2. Es wurden nur 2.72 kg des silikonhaltigen Polyvinylalkohols aus Beispiel d) statt W25/140 verwendet. Ferner wurden 14 bar Ethylen aufgedrückt. Dispersionsanalysen: siehe Tabelle 1.

### Beispiel 6:

Fahrweise wie Vergleichsbeispiel 2. Es wurden nur 2.71 kg des silikonhaltigen Polyvinylalkohols aus Beispiel e) statt W25/140 verwendet. Ferner wurden 14 bar Ethylen aufgedrückt. Dispersionsanalysen: siehe Tabelle 1.

### Beispiel 7:

Fahrweise wie Vergleichsbeispiel 2. Es wurden nur 2.71 kg des silikonhaltigen Polyvinylalkohols aus Beispiel f) statt W25/140 verwendet. Ferner wurden 14 bar Ethylen aufgedrückt. Dispersionsanalysen: siehe Tabelle 1.

### Beispiel 8:

Die Dispersion aus Beispiel 7 wurde mit 5 Gew.-% (fest/fest) des silikonhaltigen Polyvinylalkohols aus Beispiel f) versetzt und mit Wasser auf eine Verdüsungsviskosität von 250 mPas verdünnt. Die Dispersion wurde dann mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 Gew.-% handelsüblichem Antiblockmittel (Gemisch aus Calcium-Magnesium-Carbonat und Magnesiumhydrosilikat) versetzt. Es wurde ein weißes, rieselfähiges Pulver erhalten.

Wie Tabelle 1 zu entnehmen ist, eignen sich die in den Beispielen hergestellten, silikonhaltigen Polyvinylalkohole (Vinylalkohol-PDMS-Copolymer bzw. Vinylacetat-Vinylalkohol-PDMS Terpolymer) bestens zum Einsatz in der Emulsionspolymerisation.

Dies belegt der Vergleich der Vergleichsbeispiele V1 bis V4, die mit handelsüblichen Polyvinylalkoholen, die sich bereits bei der Emulsionspolymerisation bewährt haben, hergestellt wurden, mit den Beispielen 1 bis 7, die mit silikonhaltigen Polyvinylalkoholen hergestellt wurden.
Es wurden damit Dispersionen mit vorteilhafter Teilchengrößenverteilung erhalten, eine Koagulatbildung wurde in keinem einzigen Fall beobachtet. Die Viskosität kann über das Molekulargewicht des Polyvinylalkohols in einem weiten Bereich variiert werden (siehe Vergleichsbeispiele V1, V3, V4).

**Tabelle 1: Dispersionsanalysen**

| Bsp. | Tg | pH | BF 20 | D | Dn | Dv | O | FG |
|---|---|---|---|---|---|---|---|---|
| | °C | | mPas | nm | µm | µm | m² | % |
| V1 | 9.6 | 4.83 | 385 | 275 | 0.219 | 0.451 | 20.0 | 58.8 |
| V2 | 9.2 | 5.18 | 3220 | 390 | 0.08 | 0.759 | 16.7 | 58.0 |
| V3 | 10.3 | 5.15 | 8400 | 317 | 0.08 | 0.314 | 26.7 | 59.7 |
| V4 | 9.3 | 5.34 | 585 | 267 | 0.209 | 0.493 | 19.9 | 58.9 |
| 1 | 9.0 | 4.9 | 212.5 | 248 | 0.127 | 0.968 | 23.5 | 59.0 |
| 2 | 8.6 | 5.23 | 180 | 256 | 0.219 | 0.452 | 21.1 | 60.2 |
| 3 | 12.2 | 4.3 | 4040 | 227 | 0.111 | 0.175 | 39.2 | 58.1 |
| 4 | 12.4 | 5.5 | 1360 | 289 | 0.275 | 0.312 | 20.0 | 60.9 |
| 5 | 8.0 | 5.4 | 294 | 234 | 0.102 | 1.323 | 25.7 | 59.1 |
| 6 | 8.7 | 5.3 | 274 | 250 | 0.109 | 1.439 | 26.1 | 58.8 |
| 7 | 6.8 | 5.2 | 293 | 229 | 0.137 | 0.180 | 36.4 | 56.9 |

| | | | | | | | | |
|---|---|---|---|---|---|---|---|---|
| BF 20 = Brookfield-Viskosität, D = Mittlere Teilchengröße (Nanosizer), Dn = Mittlere Teilchengröße (Zahlenmittel, Coulter Counter), Dv = Mittlere Teilchengröße (Volumenmittel, Coulter Counter), O = Teilchenoberfläche pro g Polymerdispersion, FG = Festgehalt. | | | | | | | | |

Mit den Dispersionen wurden Farben in einer silikatreichen Rezeptur 1 und einer carbonatreichen Rezeptur 2 gemäß der nachfolgend dargestellten Rezepturen hergestellt (Tabellen 2 und 3):

**Tabelle 2:**

| Farbrezeptur 1 (silikatreich): | |
|---|---|
| Wasser | 350 |
| Celluloseether (Tylose MH 10000 KG4) | 5 |
| Dispergiermittel (Dispex N 40) | 2 |
| Magnesiumsilikat (Talkum N) | 100 |
| Magnesiumsilikat (Chinaclay Grade B) | 100 |
| Titandioxid-Pigment (Kronos 2300) | 100 |
| Calciumcarbonat (Omyacarb 5 GU) | 200 |
| Ammoniak | 0,5 |
| Polymerdispersion (FG 60 %) | 142.5 |
| Summe der Gewichtsteile | 1000 |

**Tabelle 3:**

| Farbrezeptur 2 (carbonatreich): | |
|---|---|
| Wasser | 350 |
| Celluloseether (Tylose MH 10000 KG4) | 5 |
| Dispergiermittel (Dispex N 40) | 2 |
| Titandioxid-Pigment (Kronos 2300) | 100 |
| Calciumcarbonat (Omyacarb 5 GU) | 400 |
| Ammoniak | 0.5 |
| Polymerdispersion (FG 60 %) | 142.5 |
| Summe der Gewichtsteile | 1000 |

### Anwendungstechnische Prüfung:

Prüfung der Hydrophobie mittels Wassertropfentest Eine Farbe, hergestellt nach den obigen Rezepturen 1 und 2, wurde auf Eterplan (handelsübliche Faserzementplatte) aufgezogen (Schichtdicke ca. 400 µm). Nach dem Trocknen wurde nach einem Tag mit einer Spritze 1 ml Wasser in Form eines Tropfens auf die Beschichtung aufgesetzt. Es wurde die Zeit gestoppt (Angabe in min), bis der Tropfen verlaufen und damit verschwunden war. Je länger diese Zeit ist, umso höher ist die Hydrophobie und die Wasserbeständigkeit der Farbe bzw. der darin enthaltenden Dispersion. Bei einer sehr hydrophoben Dispersion bleibt der Tropfen mehrere Stunden lang stehen.

Tabelle 4 zeigt die anwendungstechnischen Daten.

**Tabelle 4:**

| Beispiel | Hydrophobie Rezeptur 2 nach 1 Tag in min | Hydrophobie Rezeptur 1 nach 1 Tag in min |
|---|---|---|
| V1 | 60 | 55 |
| V2 | 180 | 190 |
| V3 | 90 | 80 |
| V4 | 60 | 50 |
| 1 | 250 | 270 |
| 2 | 280 | 320 |
| 3 | 255 | 320 |
| 4 | 250 | 270 |
| 5 | 270 | 320 |
| 6 | 280 | 350 |
| 7 | 360 | 410 |

Tabelle 4 kann nun folgendes entnommen werden:
Ein Vergleich der Vergleichsbeispiele V1, V3 und V4 (handelsübliche Polyvinylalkohole) mit den Beispielen 1 bis 4 (silikonhaltige Polyvinylalkohole nach den Beispielen d) und e)) zeigt, dass mit den silikonhaltigen Polyvinylalkoholen die Hydrophobie deutlich erhöht werden kann. Die Zunahme liegt bei einem Faktor von 3 bis 6. Bei dem Vergleichsbeispiel V2 wurde ein Silikonmakromer mit einpolymerisiert. Dies führt generell Zu einer Erhöhung der Hydrophobie. Ein Vergleich mit den Beispielen 5, 6 und 7 (ebenfalls einpolymerisiertes Silikonmakromer) zeigt allerdings, dass die Hydrophobie auch bei derartigen Systemen durch Einsatz eines silikonhaltigen Polyvinylalkohols zusätzlich merklich erhöht werden kann.

Der Vergleich von Beispiel 4 (Emulgator Genapol PF 80) mit Beispiel 1 (Emulgator Genapol X150) (jeweils silikonhaltiger Polyvinylalkohol nach Beispiel d) = PVAL mit 17.8 Gew.-% Silikon) sowie der Vergleich von Beispiel 3 (Emulgator Genapol PF 80) mit Beispiel 2 (Emulgator Genapol X150) (jeweils silikonhaltiger Polyvinylalkohol nach Beispiel e); PVAL mit 26.0 Gew.-% Silikon) zeigt, dass der Austausch von Emulgatoren - hier Genapol X150 gegen Genapol PF80 - keinen nennenswerten Einfluß auf die Hydrophobie ausübt.

Ein Vergleich von Beispiel 1 (PVAL mit 17.8 Gew.-% Silikon; nach Beispiel d)) mit Beispiel 2 (PVAL mit 26.0 Gew.-% Silikon; nach Beispiel e)) sowie von Beispiel 4 (PVAL mit 17.8 Gew.-% Silikon; nach Beispiel d)) mit Beispiel 3 (PVAL mit 26.0 Gew.-% Silikon; nach Beispiel e)) belegt, dass die Hydrophobie zunimmt, je mehr Silikon im zur Herstellung der Dispersion eingesetzten silikonhaltigen PVAL vorliegt. Dies zeigt insbesondere auch sehr deutlich die Reihe Beispiel 5 (PVAL mit 17.8 Gew.-% Silikon; nach Beispiel d)), Beispiel 6 (PVAL mit 26.0 Gew.-% Silikon; nach Beispiel e)) und Beispiel 7 (PVAL mit 31.3 Gew.-% Silikon; nach Beispiel f)).

Geht man von einer Dispersion mit den silikonhaltigen Polyvinylalkoholen aus, so führt die Zugabe von einpolymerierbarem Silikonmakromer zu einer geringfügigen Erhöhung der Hydrophobie. Dies belegt der Vergleich von Beispiel 1 (PVAL mit 17.8 Gew.-% Silikon; ohne Silikonmakromer) bzw. von Beispiel 4 (PVAL mit 17.8 Gew.-% Silikon, ohne Silikonmakromer) mit Beispiel 5 (PVAL mit 17.8 Gew.-% Silikon; mit Silikonmakromer in der Dispersion). Dies belegt ferner der Vergleich von Beispiel 2 (PVAL mit 26.0 Gew.-% Silikon; ohne Silikonmakromer) bzw. von Beispiel 3 (PVAL mit 26.0 Gew.-% Silikon, ohne Silikonmakromer) mit Beispiel 6 (PVAL mit 26.0 Gew.-% Silikon; mit Silikonmakromer in der Dispersion). Der Haupteinfluß auf die Erhöhung der Hydrophobie rührt aber von dem Einsatz von silikonhaltigen Polyvinylalkoholen her, der zusätzliche Einsatz von Silikonmakromeren bringt nur eine eher geringfügigere Verbesserung der Hydrophobie mit sich.

## Patentansprüche

1. Verfahren zur Herstellung von mit Silikon modifizierten Polymerisaten in Form deren wässrigen Polymerdispersionen oder in Form deren Polymerpulver mittels radikalischer Polymerisation von ethylenisch ungesättigten Monomeren in wässrigem Medium und.gegebenenfalls Trocknung der damit erhältlichen Polymerdispersionen, **dadurch gekennzeichnet, dass**
ein oder mehrere Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide polymerisiert werden,
wobei vor, während oder nach deren Polymerisation ein silikonhaltiges Vinylalkohol-Mischpolymerisat zugegeben wird, enthaltend
a) 0 bis 60 Gew.-% ein oder mehrere Monomereinheiten von Vinylestern von unverzweigten oder verzweigten Alkylcarbonsäuren mit 1 bis 15 C-Atomen,
b) 20 bis 99.5 Gew.-% Vinylalkohol-Einheiten,
c) 0.5 bis 70 Gew.-% Monomereinheiten von einem oder mehreren Silikonen mit der allgemeinen Formel
R¹ₐR₃₋ₐSiO(SiR₂O)ₙSiR₃₋ₐR¹ₐ,
wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 10 bis 1000,
sowie gegebenenfalls weiteren Hilfsmonomeren, wobei mindestens ein Silikon mindestens einen Rest R¹ enthält, und wobei sich die Angaben in Gew.-% auf 100 Gew.-% aufaddieren.

2. Verfahren nach Anspruch 1, **dadurch gekennzeichnet, dass** das silikonhaltige Vinylalkohol-Mischpolymerisat als Vinylester-Einheit a) Vinylacetat-Einheiten enthält.

3. Verfahren nach Anspruch 1 oder 2, **dadurch gekennzeichnet, dass** das silikonhaltige Vinylalkohol-Mischpolymerisat als Silikoneinheit-Einheit c) solche enthält, welche sich von Silikonen ableiten in denen R¹ ein Alkenylreste mit 2 bis 8 C-Atomen ist.

4. Verfahren nach Anspruch 3, **dadurch gekennzeichnet, dass** das silikonhaltige Vinylalkohol-Mischpolymerisat als Silikoneinheit-Einheit c) solche enthält, welche sich von Silikonen ableiten aus der Gruppe umfassend α -Monovinyl-Polydimethylsiloxane, α -Mono-(3-acryloxypropyl)-Polydimethylsiloxane, α -Mono-(acryloxymethyl)-Polydimethylsiloxane, α -Mono-(3-methacryloxypropyl)-Polydimethylsiloxane α,ω-Divinyl-Polydimethylsiloxane, α,ω-Di-(3-acryloxypropyl)-Polydimethylsiloxane, α,ω-Di-(3-methacryl-oxypropyl)-Polydimethylsiloxane.

5. Verfahren nach Anspruch 1 bis 4, **dadurch gekennzeichnet, dass** als ethylenisch ungesättigte Monomere Vinylacetat, oder Gemische enthaltend Vinylacetat und Ethylen, oder Gemische enthaltend Vinylacetat und weitere Vinylester und gegebenenfalls Ethylen, oder Gemische enthaltend Vinylacetat und Ethylen und Vinylchlorid, oder Vinylester-Gemische enthaltend Acrylsäureester, oder (Meth)acrylsäureester-Gemische, oder Mischungen enthaltend Styrol und Butadien oder (Meth)acrylsäureester, polymerisiert werden.

6. Verfahren nach Anspruch 5, **dadurch gekennzeichnet, dass** Gemische enthaltend Vinylacetat und Ethylen; oder Gemische enthaltend Vinylacetat und Ethylen und Vinylester einer α-verzweigten Carbonsäure mit 9 oder 10 C-Atomen polymerisiert werden.

7. Verfahren nach Anspruch 1 bis 6, **dadurch gekennzeichnet, dass** mit den ethylenisch ungesättigten Monomeren noch ein oder mehrere Silane copolymerisiert werden, aus der Gruppe umfassend γ-Acryl- bzw. γ-Methacryloxypropyltri(alkoxy)silane, α-Methacryloxymethyltri(alkoxy)silane, γ-Methacryl-oxypropyl-methyldi(alkoxy)silane, Vinylalkyldi(ahkoxy)-silane und Vinyltri(alkoxy)silane.

8. Verfahren nach Anspruch 1 bis 7, **dadurch gekennzeichnet, dass** mit den ethylenisch ungesättigten Monomeren noch ein oder mehrere Epoxy-funktionelle Monomere copolymerisiert werden, aus der Gruppe umfassend Glycidylacrylat, Glycidylmethacrylat, Allylglycidether, Vinylglycidether.

9. Verfahren nach Anspruch 1 bis 8, **dadurch gekennzeichnet, dass** mit den ethylenisch ungesättigten Monomeren noch ein oder mehrere Silikonmakromere mit mindestens einer ungesättigten Gruppe copolymerisiert werden, aus der Gruppe umfassend lineare oder verzweigte Polydialkylsiloxane mit C₁- bis C₆-Alkylrest, und mit einer Kettenlänge von 10 bis 1000, bevorzugt 50 bis 500 SiO(CₙH₂ₙ₊₁)₂-Einheiten, welche eine oder zwei terminale, oder ein oder mehrere kettenständige, polymerisierbare Gruppen enthalten.

10. Mit Silikon modifizierte Polymerisate in Form deren wässrigen Polymerdispersionen oder in Form deren Polymerpulver erhältlich mittels der Verfahren gemäß Anspruch 1 bis 9.

11. Verwendung der mit Silikon modifizierten Polymerisate gemäß Anspruch 10 in Klebemitteln und Beschichtungsmitteln.

12. Verwendung der mit Silikon modifizierten Polymerisate gemäß Anspruch 10 zur Verfestigung von Fasern oder anderen partikulären Materialien.

13. Verwendung der mit Silikon modifizierten Polymerisate gemäß Anspruch 10 als Modifizierungsmittel und als Hydrophobierungsmittel.

14. Verwendung der mit Silikon modifizierten Polymerisate gemäß Anspruch 10 in Poliermitteln.

15. Verwendung der mit Silikon modifizierten Polymerisate gemäß Anspruch 10 in der Kosmetik, insbesondere im Bereich Haarpflege.

16. Verwendung der mit Silikon modifizierten Polymerisate gemäß Anspruch 10 als Schutzbeschichtung oder Releasebeschichtung.

17. Verwendung der mit Silikon modifizierten Polymerisate gemäß Anspruch 10 als Bindemittel für Anstrich-, Klebe- und Beschichtungsmittel im Baubereich.

18. Verwendung nach Anspruch 17 in Fliesenklebern und Vollwärmeschutzklebemitteln.

19. Verwendung nach Anspruch 17 in emissionsarmen Kunststoffdispersionsfarben und Kunststoffdispersionsputzen, sowohl für den Innenbereich wie den Aussenbereich.

20. Vermendung von Silikoneinheiten enthaltende Polymerisaten mit
a) 0 bis 60 Gew.-% ein oder mehrere Monomereinheiten von Vinylestern von unverzweigten oder verzweigten Alkylcarbonsäuren mit 1 bis 15 C-Atomen,
b) 20 bis 99.5 Gew.-% Vinylalkohol-Einheiten,
c) 0.5 bis 70 Gew.-% Monomereinheiten-von einem oder mehreren Silikonen mit der allgemeinen Formel
R¹ₐR₃₋ₐSiO (SiR₂O)ₙSiR₃₋ₐR¹ₐ,
wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 10 bis 1000,
sowie gegebenenfalls weiteren Hilfsmonomeren, wobei mindestens ein Silikon mindestens einen Rest R¹ enthält, und wobei sich die Angaben in Gew.-% auf 100 Gew.-% aufaddieren, als Schutzkolloide.

## Claims

1. A process for preparing silicone-modified polymers in the form of their aqueous polymer dispersions or in the form of their polymer powders by means of free-radical polymerization of ethylenically unsaturated monomers in an aqueous medium and, if appropriate, drying of the polymer dispersions obtainable in this way, **characterized in that** one or more monomers from the group consisting of vinyl esters of unbranched or branched alkylcarboxylic acids having from 1 to 15 carbon atoms, methacrylic esters and acrylic esters of alcohols having from 1 to 15 carbon atoms, vinyl aromatics, olefins, dienes and vinyl halides are polymerized,
with a silicone-containing vinyl alcohol copolymer comprising
a) from 0 to 60% by weight of one or more monomer units of vinyl esters of unbranched or branched alkylcarboxylic acids having from 1 to 15 carbon atoms,
b) from 20 to 99.5% by weight of vinyl alcohol units,
c) from 0.5 to 70% by weight of monomer units of one or more silicones having the general formula R¹ₐR₃₋ₐSiO(SiR₂O)ₙSiR₃₋ₐR¹a, where the radicals R are identical or different and are each a monovalent, substituted or unsubstituted alkyl radical or alkoxy radical having in each case from 1 to 18 carbon atoms, R¹ is a polymerizable group, a is 0 or 1 and n is from 10 to 1000,
and also, if desired, further auxiliary monomers, where at least one silicone contains at least one radical R¹ and the percentages by weight add up to 100% by weight being added before, during or after their polymerization.

2. Process according to Claim 1, **characterized in that** the silicone-containing vinyl alcohol copolymer contains vinyl acetate units as vinyl ester unit a).

3. Process according to Claim 1 or 2, **characterized in that** the silicone-containing vinyl alcohol copolymer contains silicone units c) derived from silicones in which R¹ is an alkenyl radical having from 2 to 8 carbon atoms.

4. Process according to Claim 3, **characterized in that** the silicone-containing vinyl alcohol copolymer contains silicone units c) derived from silicones selected from the group consisting of α-monovinylpolydimethylsiloxanes, α-mono(3-acryloxypropyl)polydimethylsiloxanes, a-mono(acryloxymethyl)polydimethylsiloxanes, α-mono (3-methacryloxypropyl)polydimethylsiloxanes, α,ω-divinyl-polydimethylsiloxanes, α,ω-di(3-acryloxypropyl)-polydimethylsiloxanes, α,ω-di(3-methacryloxypropyl)polydimethylsiloxanes.

5. Process according to any of Claims 1 to 4, **characterized in that** vinyl acetate or mixtures comprising vinyl acetate and ethylene, or mixtures comprising vinyl acetate and further vinyl esters and, if desired, ethylene, or mixtures comprising vinyl acetate and ethylene and vinyl chloride, or vinyl ester mixtures containing acrylic esters, or (meth)acrylic ester mixtures, or mixtures comprising styrene and butadiene or (meth)acrylic esters, are polymerized as ethylenically unsaturated monomers.

6. Process according to Claim 5, **characterized in that** mixtures comprising vinyl acetate and ethylene, or mixtures comprising vinyl acetate and ethylene and vinyl esters of an α-branched carboxylic acid having 9 or 10 carbon atoms, are polymerized.

7. Process according to any of Claims 1 to 6, **characterized in that** one or more silanes from the group consisting of γ-acryl- or γ-methacryl-oxypropyltri(alkoxy)silanes, α-methacryloxymethyltri(alkoxy)silanes, γ-methacryloxypropylmethyldi(alkoxy)silanes, vinylalkyldi(alkoxy)silanes and vinyltri(alkoxy)silanes are additionally copolymerized with the ethylenically unsaturated monomers.

8. Process according to any of Claims 1 to 7, **characterized in that** one or more epoxy-functional monomers from the group consisting of glycidyl acrylate, glycidyl methacrylate, allyl glycidyl ether, vinyl glycidyl ether are additionally copolymerized with the ethylenically unsaturated monomers.

9. Process according to any of Claims 1 to 8, **characterized in that** one or more silicone macromers which have at least one unsaturated group and are selected from the group consisting of linear or branched polydialkylsiloxanes having a C₁-C₆-alkyl radical and a chain length of from 10 to 1000, preferably from 50 to 500, SiO(CₙH₂ₙ₊₁)₂ units and contain one or two terminal polymerizable groups or one or more polymerizable groups on the chain are additionally copolymerized with the ethylenically unsaturated monomers.

10. Silicone-modified polymers in the form of their aqueous polymer dispersions their or in the form of their polymer powders which are obtainable by means of the process according to any of Claims 1 to 9.

11. Use of the silicone-modified polymers according to Claim 10 in adhesives and coating compositions.

12. Use of the silicone-modified polymers according to Claim 10 for strengthening fibers or other particulate materials.

13. Use of the silicone-modified polymers according to Claim 10 as modifying agent and as hydrophobicizing agent.

14. Use of the silicone-modified polymers according to Claim 10 in polishes.

15. Use of the silicone-modified polymers according to Claim 10 in cosmetics, in particular in the field of haircare.

16. Use of the silicone-modified polymers according to Claim 10 as protective coating or release coating.

17. Use of the silicone-modified polymers according to Claim 10 as binder for paints, adhesives and coating compositions in the building sector.

18. Use according to Claim 17 in tile adhesives and thermal insulation adhesives.

19. Use according to Claim 17 in low-emission plastic emulsion paints and plastic emulsion renders, both for interior and exterior use.

20. Use of polymers which contain silicone units and comprise
a) from 0 to 60% by weight of one or more monomer units of vinyl esters of unbranched or branched alkylcarboxylic acids having from 1 to 15 carbon atoms,
b) from 20 to 99.5% by weight of vinyl alcohol units,
c) from 0.5 to 70% by weight of monomer units of one or more silicones having the general formula R¹ₐR₃₋ₐSiO(SiR₂O)ₙSiR₃₋ₐR¹a, where the radicals R are identical or different and are each a monovalent, substituted or unsubstituted alkyl radical or alkoxy radical having in each case from 1 to 18 carbon atoms, R¹ is a polymerizable group, a is 0 or 1 and n is from 10 to 1000,
and also, if desired, further auxiliary monomers, where at least one silicone contains at least one radical R¹ and the percentages by weight add up to 100% by weight, as protective colloids.

## Revendications

1. Procédé pour la préparation de polymères modifiés par des silicones, sous forme de leurs dispersions aqueuses de polymères ou sous forme de leurs poudres de polymères, par polymérisation radicalaire de monomères à insaturation éthylénique en milieu aqueux et éventuellement séchage des dispersions de polymères pouvant être ainsi obtenues, **caractérisé en ce qu'**on polymérise un ou plusieurs monomères choisis dans le groupe comprenant les esters vinyliques d'acides alkylcarboxyliques ramifiés ou non ramifiés, ayant de 1 à 15 atomes de carbone, les esters d'acide méthacrylique et les esters d'acide acrylique avec des alcools ayant de 1 à 15 atomes de carbone, les composés vinylaromatiques, les oléfines, les diènes et les halogénures de vinyle, en ajoutant avant, pendant ou après leur polymérisation un copolymère siliconé d'alcool vinylique, contenant
a) 0 à 60 % en poids d'un ou plusieurs motifs monomères d'esters vinyliques d'acides alkylcarboxyliques ramifiés ou non ramifiés ayant de 1 à 15 atomes de carbone,
b) 20 à 99,5 % en poids de motifs alcool vinylique,
c) 0,5 à 70 % en poids de motifs monomères d'un ou plusieurs silicones de formule générale R¹ₐR₃₋ₐSiO (SiR₂O)ₙSiR₃₋ₐR¹ₐ, R étant identiques ou différents, et représentant un radical alkyle monovalent éventuellement substitué ou un radical alcoxy monovalent éventuellement substitué, ayant chacun de 1 à 18 atomes de carbone, R¹ représentant un groupe polymérisable, a étant 0 ou 1, et n allant de 10 à 1 000,
ainsi qu'éventuellement d'autres monomères auxiliaires, au moins un silicone contenant au moins un radical R¹, et les données en % en poids s'ajoutant à 100 % en poids.

2. Procédé selon la revendication 1, **caractérisé en ce que** le copolymère siliconé d'alcool vinylique contient des motifs acétate de vinyle en tant que motif ester vinylique a).

3. Procédé selon la revendication 1 ou 2, **caractérisé en ce que** le copolymère siliconé d'alcool vinylique contient en tant que motif silicone c) de tels motifs qui dérivent de silicones dans lesquels R¹ est un radical alcényle ayant de 2 à 8 atomes de carbone.

4. Procédé selon la revendication 3, **caractérisé en ce que** le copolymère siliconé d'alcool vinylique contient en tant que motif silicone c) de tels motifs qui dérivent de silicones choisis dans le groupe comprenant des α-monovinyl-polydiméthyl-siloxanes, des α-mono-(3-acryloxypropyl)-poly-diméthylsiloxanes, des α-mono-(acryloxyméthyl)-polydiméthylsiloxanes, des α-mono-(3-méthacryloxy-propyl)-polydiméthylsiloxanes, des α,ω-divinyl-polydiméthylsiloxanes, des α,ω-di-(3-acryloxypropyl)-polydiméthylsiloxanes, des α,ω-di(3-méthacryloxypropyl)-polydiméthylsiloxanes.

5. Procédé selon l'une quelconque des revendications 1 à 4, **caractérisé en ce qu'**on polymérise en tant que monomères à insaturation éthylénique de l'acétate de vinyle ou des mélanges contenant de l'acétate de vinyle et de l'éthylène, ou des mélanges contenant de l'acétate de vinyle et d'autres esters vinyliques et éventuellement de l'éthylène, ou des mélanges contenant de l'acétate de vinyle et de l'éthylène et du chlorure de vinyle, ou des mélanges d'esters vinyliques contenant des esters d'acide acrylique, ou des mélanges d'esters d'acide (méth)acrylique, ou des mélanges contenant du styrène et du butadiène ou des esters d'acide (méth)acrylique.

6. Procédé selon la revendication 5, **caractérisé en ce qu'**on polymérise des mélanges contenant de l'acétate de vinyle et de l'éthylène, ou des mélanges contenant de l'acétate de vinyle et de l'éthylène et des esters vinyliques d'un acide carboxylique α-ramifié ayant 9 ou 10 atomes de carbone.

7. Procédé selon l'une quelconque des revendications 1 à 6, **caractérisé en ce qu'**on copolymérise avec les monomères à insaturation éthylénique encore un ou plusieurs silanes choisis dans le groupe comprenant les γ-acryl- ou γ-méthacryloxypropyltri-(alcoxy)silanes, les α-méthacryloxyméthyltri-(alcoxy)silanes, les γ-méthacryloxypropyl-méthyldi (alcoxy) silanes, les vinylalkyldi(alcoxy)silanes et les vinyltri(alcoxy)silanes.

8. Procédé selon l'une quelconque des revendications 1 à 7, **caractérisé en ce qu'**on copolymérise avec les monomères à insaturation éthylénique encore un ou plusieurs monomères à fonction époxy, choisis dans le groupe comprenant l'acrylate de glycidyle, le méthacrylate de glycidyle, l'allylglycidéther, le vinylglycidéther.

9. Procédé selon l'une quelconque des revendications 1 à 8, **caractérisé en ce qu'**on copolymérise avec les monomères à insaturation éthylénique encore un ou plusieurs macromonomères silicone comportant au moins un groupe insaturé, choisis dans le groupe comprenant des polydialkylsiloxanes linéaires ou ramifiés, à radical alkyle en C₁-C₆ et ayant une longueur de chaîne de 10 à 1 000, de préférence de 50 à 500 motifs SiO(CₙH₂ₙ₊₁)₂ qui contiennent un ou deux groupes polymérisables en bout de chaîne ou un ou plusieurs groupes polymérisables sur la chaîne.

10. Polymères modifiés par des silicones, sous forme de leurs dispersions aqueuses de polymères ou sous forme d'une de leurs poudres de polymères, pouvant être obtenus par les procédés selon l'une quelconque des revendications 1 à 9.

11. Utilisation des polymères modifiés par des silicones selon la revendication 10, dans des colles et des produits de revêtement.

12. Utilisation des polymères modifiés par des silicones selon la revendication 10, pour la consolidation de fibres ou d'autres matériaux particulaires.

13. Utilisation des polymères modifiés par des silicones selon la revendication 10, en tant qu'agents de modification et en tant qu'agents d'hydrophobie.

14. Utilisation des polymères modifiés par des silicones selon la revendication 10, dans des produits de polissage.

15. Utilisation des polymères modifiés par des silicones selon la revendication 10, en cosmétique, en particulier dans le domaine du soin capillaire.

16. Utilisation des polymères modifiés par des silicones selon la revendication 10, en tant que revêtement protecteur ou revêtement antiadhésif.

17. Utilisation des polymères modifiés par des silicones selon la revendication 10, en tant que liant pour des peintures, des colles et des produits de revêtement dans le domaine du bâtiment.

18. Utilisation selon la revendication 17, dans des colles pour carreaux et des colles à protection thermique totale.

19. Utilisation selon la revendication 17, dans des peintures consistant en des dispersions de matières plastiques et des enduits consistant en des dispersions de matières plastiques, à faible émission, aussi bien pour l'intérieur que pour l'extérieur.

20. Utilisation de polymères comportant des motifs silicone, contenant
a) 0 à 60 % en poids d'un ou plusieurs motifs monomères d'esters vinyliques d'acides alkylcarboxyliques ramifiés ou non ramifiés ayant de 1 à 15 atomes de carbone,
b) 20 à 99,5 % en poids de motifs alcool vinylique,
c) 0,5 à 70 % en poids de motifs monomères d'un ou plusieurs silicones de formule générale R¹ₐR₃₋ₐSiO(SiR₂O)ₙSiR₃₋ₐR¹ₐ, R étant identiques ou différents, et représentant un radical alkyle monovalent éventuellement substitué ou un radical alcoxy monovalent éventuellement substitué, ayant chacun de 1 à 18 atomes de carbone, R¹ représentant un groupe polymérisable, a étant 0 ou 1, et n allant de 10 à 1 000,
ainsi qu'éventuellement d'autres monomères auxiliaires, au moins un silicone contenant au moins un radical R¹, et les données en % en poids s'ajoutant à 100 % en poids, en tant que colloïdes protecteurs.
